# FASCICULE DE BREVET EUROPEEN

(11) **EP 0 805 339 B1**
(45) Date de publication et mention de la délivrance du brevet: **20.11.2002**
(21) Numéro de dépôt: 97106884.6
(22) Date de dépôt: 25.04.1997
(51) Int. Cl.: G01D 5/22

(54) **Dispositif de détection de position et de mouvement à variation de champ magnétique**
Mit Magnetfeldveränderungen arbeitender Bewegungs- und Positionsdetektor
Varying magnetic field position and movement detector

(30) Priorité: 29.04.1996 CH 107196
(43) Date de publication de la demande: 05.11.1997
(73) Titulaire: CSEM Centre Suisse d'Electronique et de Microtechnique S.A., 2007 Neuchâtel (CH)
(72) Inventeur: de Coulon, Yves, 2075 Thielle-Wavre (CH); Bergqvist, Johan Wilhelm, 2014 Bôle (CH); de Lambilly, Hervé, 2000 Neuchâtel (CH)
(74) Mandataire: Ravenel, Thierry Gérard Louis

(56) Documents cités:
- EP-A- 0 530 090
- US-A- 4 507 638
- SOVIET PATENT ABSTRACTS Derwent Publications Ltd., London, GB; AN 88-013259 XP002020511 & SU 1 315 792 A (N-W CORRESPONDENCE) , 7 Juin 1987
- PATENT ABSTRACTS OF JAPAN vol. 8, no. 242 (P-311), 7 Novembre 1984 & JP 59 116552 A (AISHIN SEIKI), 5 Juillet 1984,

## Description

La présente invention concerne le domaine des capteurs à variation de champ magnétique pour la détection de la position et/ou du mouvement d'une pièce mobile structurée.

Les capteurs à variation de champ magnétique comprennent les capteurs dits à "induction magnétique" et les capteurs dits à "courants de Foucault". Les premiers utilisent l'effet de concentration du champ magnétique d'une pièce en un matériau ferro-magnétique, tandis que les seconds utilisent l'effet de la modification du champ magnétique par les courants de Foucault engendrés dans une pièce métallique par ledit champ magnétique. Alors que les capteurs du premier type permettent d'utiliser un champ magnétique alternatif à relativement basse fréquence (typiquement < 50 kHz), les capteurs du second type requièrent la production d'un champ magnétique alternatif à fréquence relativement élevée (typiquement > 20 kHz).

On connaît des capteurs de position à induction magnétique utilisant le principe du transformateur électrique à noyau en ferrite. Le document EP-B1-0 453 824 décrit un capteur permettant de détecter la position transversale d'une roue d'une voiture de chemin de fer par rapport à un rail métallique sur lequel elle roule, le rail étant situé dans un entrefer du noyau. De tels dispositifs ont l'inconvénient d'être très encombrants. De plus, ils ne permettent pas la détection du mouvement de pièces miniatures.

On connaît, par ailleurs, des capteurs de proximité miniatures sans noyau. Un article, intitulé "Design of an inductive proximity sensor using a two coil planar transformer", rédigé par V. Gupta et D. P. Neirik et paru dans la revue SPIE, volume 2642, page 173, décrit un tel capteur de proximité. Ce dispositif miniature utilise deux enroulements inductifs planaires imbriqués. La présence d'une plaque métallique modifie la fréquence de résonance et le déphasage entre l'enroulement émetteur et l'enroulement récepteur. Un tel dispositif permet la mesure de la distance de la plaque métallique, mais il ne permet nullement la mesure de la position angulaire d'une pièce métallique en rotation, ou de la position linéaire d'une pièce en déplacement transversal par rapport à l'axe du capteur. Un autre inconvénient de ce dispositif est la nécessité d'un circuit électronique complexe de balayage en fréquence et de mesure de phase.

On connaît également des documents SU-A-1315792 et JP-A-59116552 des capteurs de rotation comprenant un unique enroulement de mesure et un enroulement d'excitation (SU-A-1315792) ou un aimant permanent (JP-A-59116552).

Dans la suite de la description, il sera entendu qu'à moins d'indication contraire, la désignation "capteur (ou dispositif de détection) à induction" recouvre les types de capteur à induction et à courants de Foucault.

La présente invention a donc pour but de remédier aux inconvénients de l'art antérieur mentionnés en fournissant un dispositif miniature de détection à induction, permettant un repérage de la position relative instantanée et/ou de la vitesse d'une pièce métallique structurée et mobile sans contact avec cette dernière. Plus particulièrement, un but de l'invention est de réaliser un dispositif détectant une vitesse de rotation relative nulle d'une pièce mobile.

Un autre but de l'invention est de prévoir un dispositif miniature de détection de mouvement fournissant des signaux numériques pour le comptage et un signal analogique proportionnel à la position de la pièce mobile.

Ces buts sont atteints, selon l'invention, en disposant des enroulements plans selon une structure de transformateur différentiel. Les couplages entre l'enroulement primaire et les enroulements secondaires varient, de façon complémentaire, suivant la position de la pièce métallique. Ce phénomène est dû à la réorientation des lignes de champ magnétique par les structures formées sur la pièce. Les modifications du couplage indiquent ainsi la position relative ou la vitesse de la pièce.

A cet effet, l'invention a donc pour objet un dispositif de détection de position relative et/ou de mouvement d'une pièce apte à se déplacer dont les caractéristiques sont énoncées dans la revendication 1.

Selon un mode de réalisation, on prévoit que l'enroulement primaire est alimenté par un signal alternatif et un circuit de détection mesure la modulation d'amplitude d'un signal reçu sur un enroulement secondaire, le mouvement de la pièce modulant la réception du signal.

Un avantage de l'invention est qu'elle permet la détection de mouvement de toute pièce métallique, qu'elle soit ferromagnétique ou non.

Un autre avantage de ce dispositif est qu'il détecte précisément une vitesse nulle de la pièce. Comme le dispositif est actif à vitesse nulle, il permet un repérage de la position de repos.

D'autres objets, caractéristiques et avantages de l'invention apparaîtront plus clairement à la lecture de la description suivante d'exemples de réalisation particuliers, la description étant donnée à titre d'exemple non limitatif et en liaison avec les dessins joints parmi lesquels :
- la figure 1 représente un schéma de principe du dispositif de détection selon l'invention;
- la figure 2 représente un diagramme de niveau de signal reçu avec un dispositif de détection selon l'invention;
- les figures 3 à 7 représentent des chronogrammes de signaux obtenus avec un dispositif de détection selon l'invention;
- les figures 8 à 10 représentent des circuits de détection aptes à être utilisés en liaison avec le dispositif de détection selon l'invention;
- la figure 11 représente une vue de dessus d'un dispositif de détection selon l'invention réalisé sur un substrat de silicium;
- la figure 12 représente une vue de dessus d'un dispositif de détection selon l'invention également réalisé sur un substrat de silicium;
- la figure 13 représente une vue en coupe selon la ligne XIII-XIV du dispositif de la figure 12;
- les figures 14 à 21 représentent diverses variantes, vues en coupe, de réalisation sur circuit intégré de dispositifs de détection selon l'invention;
- les figures 22 et 23 représentent deux variantes vues en coupe, d'un deuxième mode de réalisation de dispositif de détection selon l'invention; et
- les figures 24 à 26 représentent trois variantes, vues en coupe, d'un troisième mode de réalisation de dispositif de détection selon l'invention.

Dans la description et les revendications qui vont suivre, les termes d' "enroulement planaire" seront utilisés pour désigner un enroulement plat, c'est-à-dire dont l'épaisseur par rapport aux autres dimensions est faible.

L'exemple de mise en oeuvre qui va suivre concerne, notamment, la détection de la position angulaire d'un engrenage en rotation, ainsi que la détermination de sa vitesse et de son sens de rotation. Cependant, l'invention ne se limite pas à la détection de mouvement rotatif. Tout mouvement plan (linéaire, en zigzag) peut être détecté et la position relative mesurée. Enfin, la détection peut être effectuée sur des pièces non métalliques, pourvu que la pièce comporte des cibles conductrices le long du chemin de défilement du capteur.

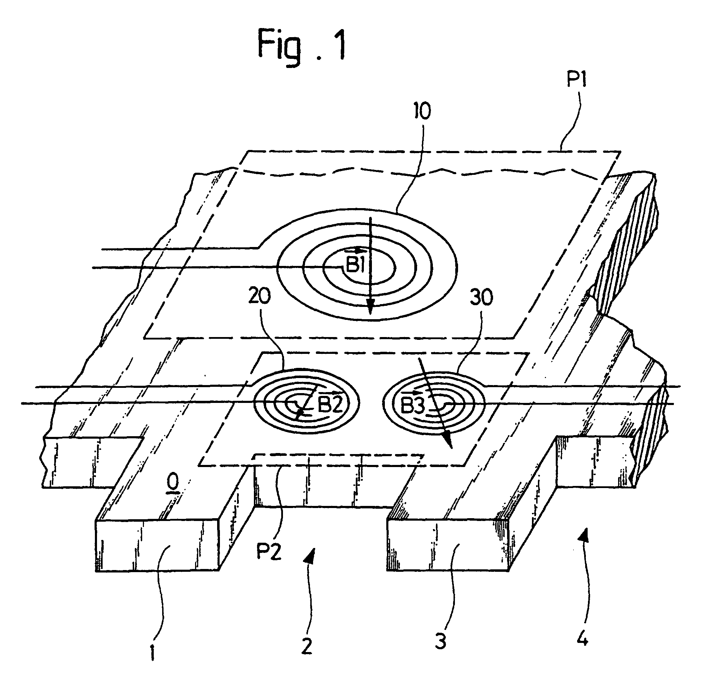

La figure 1 est un schéma de principe de l'invention. Elle représente un engrenage 0 réalisé en matériau métallique, dont on cherche à déterminer la vitesse de rotation et/ou la position angulaire relative à l'arrêt. On considérera dans un premier temps que l'engrenage 0 est réalisé en fer doux. Un dispositif de détection selon l'invention est disposé parallèlement au plan de l'engrenage 0, au niveau des dents et créneaux 1, 2, 3, 4 de celui-ci.

Le dispositif de la figure 1 comporte trois enroulements planaires 10, 20, 30 formés respectivement d'un conducteur en spirale. Ce conducteur est une piste métallique déposée sur un substrat en silicium par tout moyen approprié. L'enroulement 10 est destiné à former l'enroulement primaire. Il engendre un champ magnétique B1 englobant, au moins, la surface d'un créneau 2 et d'une dent 3 de l'engrenage 0. L'enroulement primaire 10 est disposé dans un plan P1 parallèle au plan de l'engrenage 0.

Les enroulements 20 et 30 servent d'enroulements secondaires, recevant le champ magnétique induit par l'enroulement primaire 10. Sur la figure 1, on peut voir qu'ils sont tous deux disposés dans un même plan P2, parallèle au plan de l'engrenage 0. Le plan P2 est intercalé entre le plan P1 de l'enroulement primaire 10 et l'engrenage 0. Les enroulements secondaires 20 et 30 ont, par exemple, une taille réduite par rapport à l'enroulement primaire 10. Chaque enroulement secondaire 20 ou 30 couvre, de préférence, une surface correspondant à la surface d'une dent ou d'un créneau seulement. Les enroulements secondaires 20 et 30 sont disposés en regard de l'enroulement primaire 10, de sorte que chaque enroulement secondaire 20 ou 30 reçoit une partie B2 ou B3 du champ magnétique B1.

On comprendra qu'en fonction de l'application, les dimensions, voire la position, des enroulements devront être adaptées, notamment, aux dimensions de la cible. De plus, il a été observé que le produit du taux de modulation de la tension induite par l'amplitude de cette même tension était maximal pour une position des enroulements secondaires décentrée par rapport à celle de l'enroulement primaire et que ce décentrage dépendait des dimensions de tous les éléments du capteur.

La disposition des enroulements représentée à la figure 1 permet d'effectuer une mesure différentielle. Le flux magnétique B1, engendré par l'enroulement primaire 10, se répartit entre les enroulements secondaires 20 et 30. Une telle structure permet de mesurer la différence entre les champs B2 et B3, en s'affranchissant des variations éventuelles de la valeur du champ B1 et de la distance entre le plan P2 et la pièce mobile 0. La structure différentielle est obtenue, de préférence, en disposant les deux enroulements secondaires 20 et 30 dans le plan P2, tous deux étant en regard de l'enroulement primaire 10. Cependant, d'autres dispositions sont envisageables, pourvu que chaque enroulement secondaire 20, 30 reçoive une partie du flux du champ magnétique B1 émis par l'enroulement primaire et que la déviation du flux primaire B1 vers un enroulement secondaire se fasse au détriment de la partie de flux allant dans l'autre enroulement secondaire. On peut, par exemple, placer les enroulements secondaires dans deux plans décalés. On peut encore placer les enroulements 10, 20 et 30 quasiment dans un même plan.

En fonctionnement, les enroulements primaire 10 et secondaires 20 et 30 sont couplés selon le principe d'un transformateur différentiel. La présence des dents 1, 3 en fer doux de l'engrenage 0 dévie et canalise le champ magnétique B1 émis par l'enroulement primaire 10. Ainsi dans l'exemple de la figure 1, la présence de la dent 3 de l'engrenage 0 dans l'axe de l'enroulement secondaire 30 augmente le champ magnétique B3, traversant cet enroulement 30. Au contraire, au niveau du créneau vide 2 de l'engrenage 0, le champ magnétique B2 est faible. Le passage d'une cible métallique 1 ou 3 modifie donc les lignes de champ issues de l'enroulement primaire 10, de sorte qu'il apparaît une différence entre les champs B2 et B3 reçus, respectivement, par les enroulements 20 et 30. La différence entre les champs B2 et B3 permet donc de détecter la présence ou le passage d'une dent cible métallique.

Selon l'invention, l'enroulement primaire 10 est alimenté par un courant alternatif, de sorte qu'il apparaît un signal alternatif aux bornes des enroulements secondaires 20 et 30.

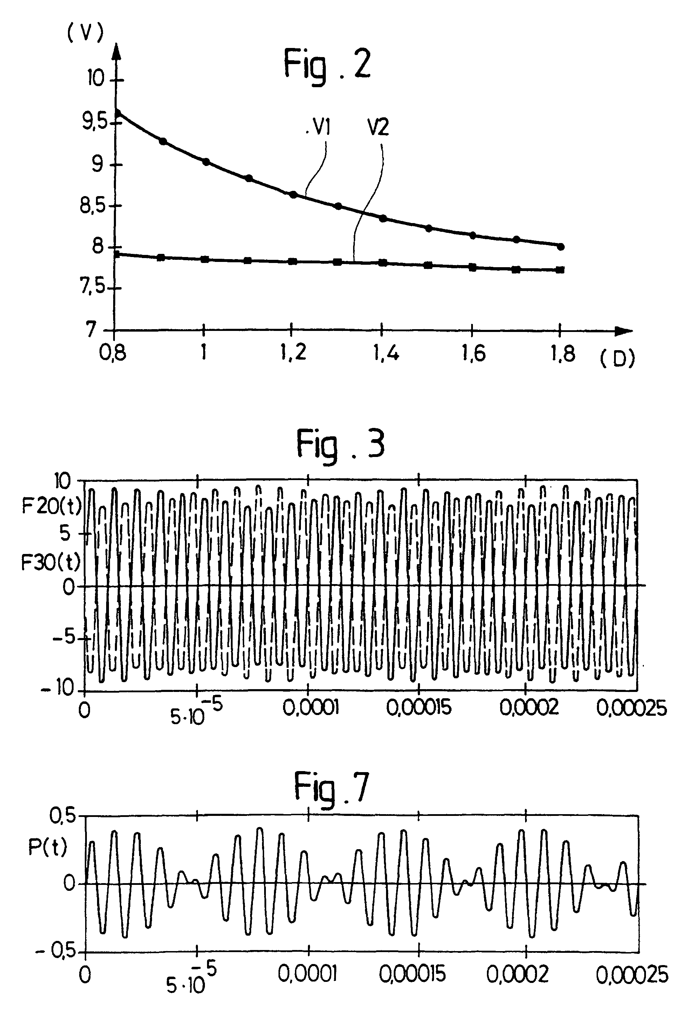

L'amplitude du signal, reçu par un enroulement secondaire 20 ou 30, est modifiée par la présence d'une dent. La figure 2 montre l'amplitude V de signal reçu par un enroulement secondaire en présence (V1) et en l'absence (V2) d'une dent. Les amplitudes V1 et V2 sont indiquées en fonction de l'écartement D entre enroulement secondaire et engrenage 0. Dans la configuration de la figure 1, par exemple, le signal apparaissant aux bornes de l'enroulement secondaire 30 est beaucoup plus important que celui de l'enroulement secondaire 20. Quand l'engrenage aura légèrement tourné, et que le créneau 2 sera dans l'axe de l'enroulement secondaire 30, la situation sera inverse, le signal apparaissant aux bornes de l'enroulement 30 sera faible. Comme la dent 1 en fer doux sera alors dans l'axe de l'enroulement secondaire 20, le signal à ses bornes sera élevé. On peut ainsi déterminer la position à l'arrêt de l'engrenage 0, en mesurant l'amplitude du signal reçu sur l'enroulement secondaire 20 et en la comparant l'amplitude du signal reçu sur l'enroulement secondaire 30. On remarque que l'amplitude V1 reste supérieure à l'amplitude V2 sur une grande plage de distance D. Sur l'exemple de la figure 2, bien que la plage de distance varie entre 0,8 mm et 1,8 mm, la valeur minimum de V1 vaut 8,1 mV et reste ainsi supérieure à la valeur maximum de V2 de 7,9 mV. En fixant un seuil entre de tels extrêmes, le dispositif permet de distinguer entre la présence et l'absence d'une dent cible malgré les variations de la distance D de la pièce à détecter.

Lorsque l'engrenage 0 tourne, le signal aux bornes de chaque enroulement secondaire 20 ou 30 passe ainsi d'un niveau élevé à un niveau faible correspondant au défilement des dents 1,3 et des créneaux 2, 4.

La figure 3 illustre ainsi en trait plein le signal F20(t) reçu aux bornes d'un enroulement secondaire 20 et en trait interrompu le signal F30 (t) reçu aux bornes de l'enroulement secondaire 30. On voit que le signal aux bornes d'un enroulement secondaire est modulé en amplitude par le passage des dents de la cible.

La vitesse de rotation de la pièce est obtenue par démodulation du signal issu d'un enroulement 20 ou 30. En effet, la fréquence de modulation permet de déterminer la fréquence de passage des dents et, par conséquent si les dents sont régulièrement espacées, la vitesse de rotation de la pièce mobile. De préférence, on applique un courant alternatif à l'enroulement primaire 10, de fréquence supérieure à la fréquence maximale de défilement des dents de l'engrenage 0.

La mesure du sens de rotation se base sur le fait que l'on dispose de deux enroulements 20 et 30 décalés par rapport aux dents de la pièce. La modulation du signal aux bornes de l'enroulement secondaire 30 est déphasée par rapport à la modulation du signal aux bornes de l'enroulement secondaire 20. Ce déphasage correspond à l'écartement des enroulements relativement à l'écartement des dents. Par exemple, si les enroulements 20, 30 ont une distance centre à centre égale à la moitié du pas de l'engrenage 0, les enveloppes de modulation des signaux F20, F30 seront déphasées de 180 degrés, comme cela est visible à la figure 3.

L'invention prévoit également de mesurer la modulation d'amplitude d'un signal reçu sur un enroulement secondaire.

De préférence, un circuit de détection démodule les signaux reçus sur les enroulements secondaires 20, 30 selon le signal appliqué à l'enroulement primaire 10. Pour déterminer le sens de rotation, le circuit de détection compare les modulations d'amplitude des signaux reçus sur les enroulements secondaires et détermine le sens de mouvement de la pièce.

Un avantage du dispositif selon l'invention est que l'amplitude du signal reçu est indépendante de la vitesse de rotation de la pièce. On peut donc détecter la vitesse nulle, le dispositif étant actif même quand l'engrenage ne bouge pas. On a vu qu'une position de repos de l'engrenage 0 peut alors être détectée, les signaux reçus indiquant si chacun des enroulements est en face d'une dent ou d'un créneau. Au lieu de cette indication binaire, on peut prévoir une indication de position de repos plus précise variant de façon continue entre la détection d'une dent et la détection d'un créneau. Par exemple, l'indication précise de l'angle de repos peut être calculée à partir des niveaux de modulation des signaux F20 et F30.

Selon une variante préférentielle, le dispositif sera pourvu d'au moins trois enroulements secondaires pour permettre, de manière aisée, la détection de la position, de la vitesse et du sens de rotation de la cible.

Pour la commodité de l'exposé, on a indiqué précédemment que la pièce à détecter était en fer doux. Chaque dent en fer doux joue alors le rôle de noyau canalisant le champ magnétique entre l'enroulement primaire 10 et un enroulement secondaire 30. Le dispositif de détection forme alors un détecteur magnétique.

Cependant, le dispositif de détection peut aussi utiliser des courants de Foucault. Ainsi, avec un engrenage en métal non magnétique, des courants se forment à l'intérieur de la dent métallique soumise à un champ magnétique, de sorte que le champ magnétique B1 est repoussé à l'extérieur de la dent, le champ étant nul dans le métal. Contrairement au cas d'un engrenage en fer doux envisagé précédemment (voir figure 1), le champ magnétique B2 traversant le créneau 2 sera alors plus fort que le champ B1 dirigé vers la dent 3 en métal non magnétique. La situation est alors inversée, le signal fort étant reçu au passage d'un créneau et le signal faible au passage d'une dent. Dans cette variante de réalisation, on peut donc toujours détecter la vitesse, le sens de rotation et la position de la pièce mobile, les signaux ayant simplement changé de signe.

De façon plus générale, on peut détecter la vitesse, la position et/ou le sens du mouvement d'une pièce non métallique mobile, en disposant des parties métalliques dont le passage sera détecté par le dispositif de détection selon l'invention. L'invention s'applique donc généralement à la détection de la position et du mouvement d'une pièce susceptible de se déplacer, la pièce comportant des zones alternées de faible et de forte perméabilité magnétique.

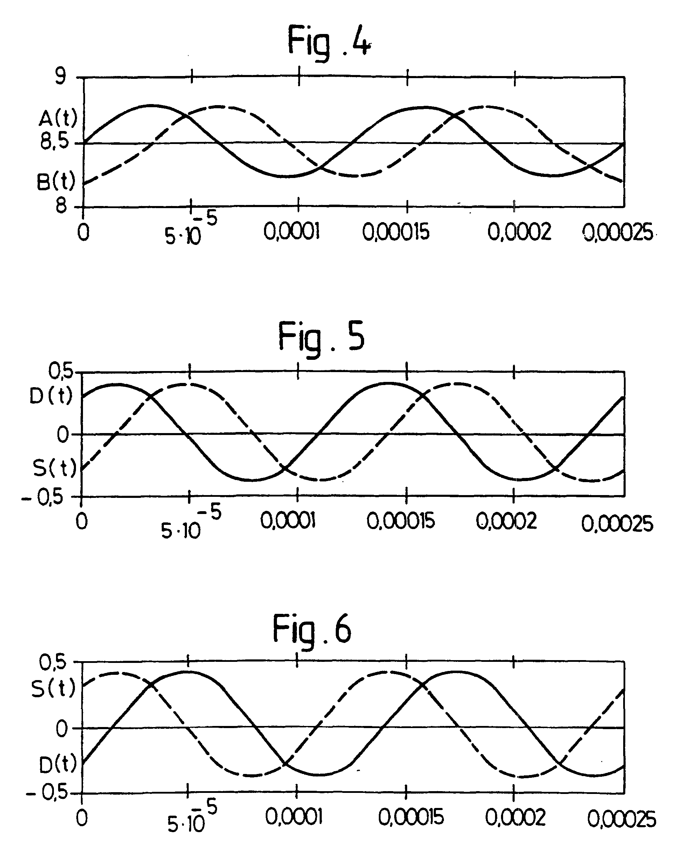

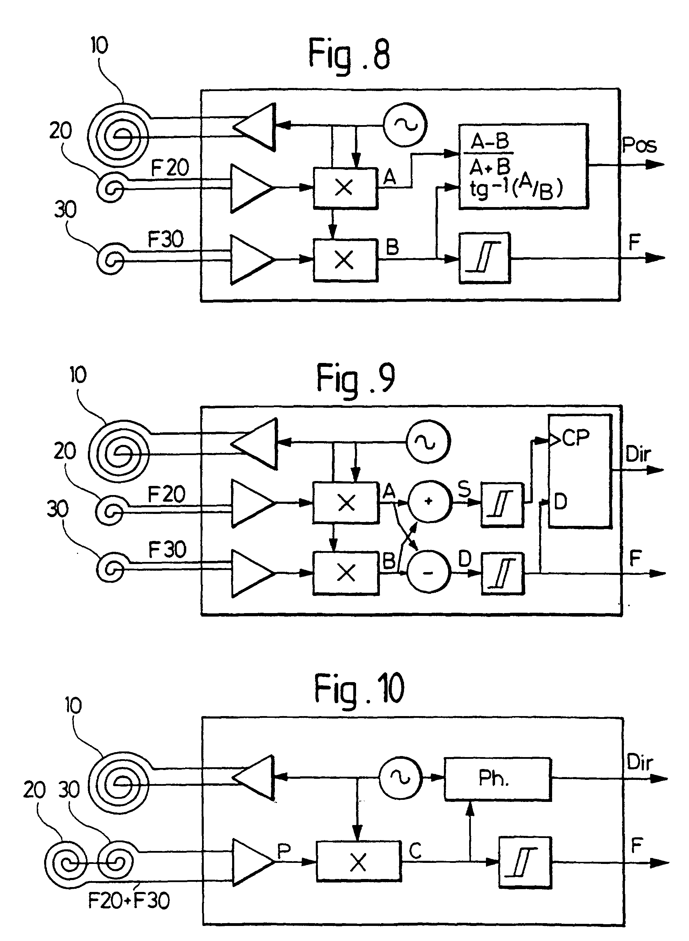

Pour détecter correctement la vitesse et le sens du mouvement de la pièce mobile, plusieurs traitements de signaux peuvent être envisagés. Les figures 4 à 7 illustrent des signaux issus de la combinaison et de la démodulation des deux signaux F20 et F30 de la figure 3. Aux figures 8 à 10, trois variantes de circuits de détection correspondants sont envisagées. On notera que le fonctionnement du dispositif de détection se prête particulièrement bien à un codage numérique de vitesse et de sens du mouvement, voire à un encodage de position numérique.

La figure 4 illustre une démodulation séparée des signaux F20 et F30 de la figure 3. Les signaux A et B correspondent au résultat de la démodulation respective du signal F20 et du signal F30 On remarque que les signaux A et B sont déphasés de 90°. Le déphasage est inversé lorsque le sens du mouvement ou de la rotation change.

La figure 8 représente un premier circuit de détection correspondant à ce principe de traitement du signal. Chaque enroulement 20, 30 est connecté à un préamplificateur suivi d'un démodulateur X, lequel reçoit également le signal alternatif primaire. On obtient ainsi le signal démodulé A correspondant à l'enroulement secondaire 20 et le signal démodulé B correspondant au signal reçu sur l'enroulement secondaire 30. L'un des signaux démodulés, par exemple le signal B, est appliqué à l'entrée d'un amplificateur de Schmidt ("trigger" ou déclencheur) pour fournir un signal binaire F dont la fréquence correspond à la fréquence de passage des zones de faible et de forte perméabilité magnétique. Cependant comme cela est visible à la figure 4, les signaux démodulés A et B sont des signaux alternatifs avec une forte composante continue ("offset"). Pour un fonctionnement correct, l'amplificateur de Schmidt devra avoir un niveau de seuil réglé approximativement autour de la valeur de cette tension continue. Une détection de la position Pos est prévue avec un bloc logique qui réalise, notamment, le calcul, à partir des signaux démodulés A et B, de la valeur de (A-B)/(A+B) et de Arctg (A+B).

Les figures 5 et 6 illustrent des signaux obtenus par des circuits pourvus d'un moyen pour supprimer l'inconvénient des tensions continues ou d'offset des signaux démodulés. En effet, en effectuant la différence D des deux signaux démodulés A et B, on obtient un signal de valeur moyenne sensiblement nul. Un autre signal S de moyenne nulle peut être obtenu en faisant la somme des signaux démodulés A et B et une moyenne. La détection des passages à 0 de la valeur du signal D ou S suffit alors à indiquer la fréquence de passage des zones de faible ou de forte perméabilité magnétique. Comme le montre la figure 6, quand le sens du mouvement change, le déphasage du signal D par rapport au signal S s'inverse.

La figure 9 illustre un circuit de détection correspondant au principe de traitement du signal exposé au paragraphe précédent. Ce circuit de détection comporte, comme celui de la figure 8, un étage de préamplification et de démodulation pour chaque enroulement secondaire 20 ou 30, fournissant les signaux A et B respectivement. Un sommateur additionne les signaux A et B pour fournir le signal somme S. Un soustracteur fournit le signal D correspondant à la différence de A et de B. Les deux signaux S et D sont respectivement appliqués à un amplificateur de Schmidt pour les mettre sous forme binaire. Le signal F sortant de l'amplificateur de Schmidt alimenté par le signal D est un signal dont la fréquence indique la vitesse de mouvement de la pièce mobile. Une bascule "flip-flop" (appelée couramment "bascule D") compare les instants de transition autour de la valeur 0 des signaux D et S, mis en forme par leur amplificateur de Schmidt respectif, pour pouvoir donner une indication binaire de direction Dir. Le signal F est ainsi appliqué à l'entrée D de la bascule, tandis que l'entrée d'horloge CP est reliée à la sortie de l'amplificateur de Schmidt alimenté par le signal S. Le principe de sommation ou de soustraction des signaux peut être plus intéressant encore comme on l'explique au paragraphe suivant.

Il s'avère, en effet, que la somme des deux signaux F20 et F30 (non démodulés), reçus sur les enroulements secondaires 20 et 30, présentent une modulation d'amplitude beaucoup plus forte que ces signaux eux-mêmes.

La figure 7 illustre ainsi la somme P(t) des deux signaux F20(t) et F30(t) de la figure 3 . On voit clairement que le signal P est beaucoup plus profondément modulé que les signaux F20 et F30. Il est donc particulièrement intéressant de mesurer la modulation d'amplitude du signal somme P obtenu aux bornes des bobines interconnectés.

La figure 10 illustre un circuit de détection effectuant cette opération. Les deux bobines 20 et 30 sont connectées en série, le centre de l'enroulement 20 étant relié au centre de l'enroulement 30, les deux enroulements 20 et 30 étant formés d'une spirale métallique, chacune tournant en sens opposé. Un préamplificateur fournit un signal P reproduisant le signal somme F20 + F30. La démodulation est ensuite effectuée par un étage X qui reçoit, par ailleurs, le signal alternatif appliqué à l'enroulement primaire 10. On obtient alors un signal démodulé C dont la fréquence correspond à la fréquence de passage des zones de faible et de forte perméabilité magnétique, donc à la vitesse de rotation. Le signal C est mis en forme par un amplificateur de Schmidt qui fournit un signal binaire de même fréquence que le signal C.

Une détection de la direction de rotation peut être obtenue en comparant la phase du signal C et du signal alternatif primaire. Le circuit de détection comporte donc un comparateur de phase Ph recevant le signal C et ledit signal alternatif primaire. Le signal Dir, résultat de l'opération de comparaison est, par exemple, un signal binaire dont l'état 0 ou 1 indique le sens de mouvement.

D'autres variantes de circuit de détection peuvent être envisagées sans sortir du cadre de la présente invention. Par exemple, l'étage de démodulation d'un des circuits des figures 8, 9 ou 10 peut être combiné au bloc de calcul de la position Pos de la figure 8, ou de la bascule de la figure 9 ou à l'étage comparateur de phase de la figure 10.

De plus, les transitions successives du signal binaire F peuvent être enregistrées par un compteur ou dans une mémoire pour indiquer en permanence la position angulaire effective, de la pièce mobile, par exemple, l'engrenage.

Un mode de réalisation préféré du dispositif de détection de position et de mouvement va maintenant être décrit plus en détail. Il concerne la réalisation du dispositif sous forme miniaturisée.

Selon ce mode de réalisation, les enroulements planaires sont réalisés par dépôt et/ou gravage, selon le cas, d'une couche conductrice sur un ou plusieurs substrats, par exemple, en silicium. Un mode de réalisation prévoit même l'utilisation des deux faces d'un même substrat. L'enroulement primaire peut être déposé et/ou gravé sur la première face tandis que les enroulements secondaires sont déposés et/ou gravés sur la seconde face.

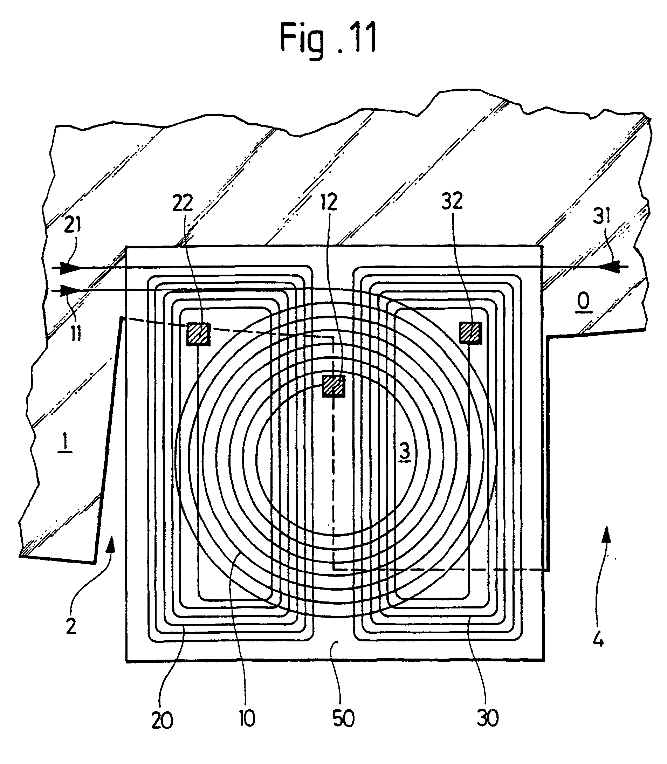

La figure 11 illustre une telle réalisation des enroulements sur une plaquette ou substrat 50, qui peut être en silicium. La pièce mobile, ici un engrenage 0, est représentée en arrière plan. La plaquette 50 est disposée, sans contact, parallèlement à l'engrenage 0. Les dimensions de la plaquette 50 sont sensiblement égales à l'arc couvert par une dent 3 et un créneau 2 de l'engrenage 0. L'enroulement primaire 10 est une spirale métallique dont la spire extérieure atteint presque les bords de la plaquette 50. La spirale est interrompue avant d'atteindre le centre afin de préserver un disque central sans spire où le champ magnétique B1 sera sensiblement constant. Les deux enroulements secondaires 20 et 30 sont réalisés sur la face opposée de la plaquette, chacun recouvrant un demi-plan de cette face. L'enroulement 30 couvre ainsi un demi-plan correspondant (voir figure 11) à la dent 3 de l'engrenage 0.

De préférence, la face comportant les enroulements secondaires 20 et 30 est orientée vers la pièce à détecter afin de recevoir correctement le champ magnétique émis par l'enroulement primaire 10 et canalisé par les dents 1, 3 de l'engrenage 0. Il est préférable que les enroulements secondaires 20, 30 soient formés de spires rectangulaires ou carrées afin qu'ils couvrent une surface maximale de réception du champ magnétique B1, B2. Toute la spirale de l'enroulement primaire 10 est ainsi couverte par l'enroulement secondaire 20 et l'enroulement secondaire 30.

La réalisation du dispositif selon l'invention peut aussi être faite sur une même face d'un substrat. Cette disposition permet de réaliser les enroulements en métaux différents. L'enroulement primaire peut ainsi être réalisé en un métal bon conducteur, par exemple du cuivre, ce qui limite la résistivité de l'élément inducteur. Les enroulements secondaires peuvent être en un métal permettant une fine gravure, par exemple l'aluminium, pour que chaque enroulement secondaire présente le plus grand nombre de tours, générateur de signal, pour un encombrement donné.

Enfin, des surfaces de connexion 11, 12, 21, 22, 31, 32 sont prévues aux extrémités des enroulements pour les connecter au circuit de détection. Notons que les enroulements secondaires sont spiralés en sens inverse afin de faciliter leur connexion dans l'ordre prévu à la figure 10.

Selon une variante avantageuse de l'invention, le circuit de détection sera réalisé dans une plaquette de silicium, servant elle-même de substrat pour les enroulements primaire et secondaires. L'intégration du dispositif est, dans ce cas, optimale et les plages de contact 12, 22 et 32 peuvent être connectées directement au circuit intégré de détection. Les opérations d'assemblage et/ou de connexion s'en trouvent, alors, très simplifiées. En effet, on peut envisager de réaliser les enroulements secondaires 20 et 30 sur une même face et l'enroulement primaire sur l'autre face ou encore, sur un deuxième substrat qui sera fixé, par exemple par collage, au premier. On peut encore réaliser tous les enroulements sur une même face en prévoyant, soit de les espacer les uns des autres, soit de les superposer (enroulement primaire par-dessus les enroulements secondaires) en intercalant une couche d'un matériau isolant.

Ces dispositions ont l'avantage de permettre une miniaturisation poussée, de diminuer, voire supprimer, les problèmes de connexion par fils et de réduire la sensibilité aux parasites électromagnétiques.

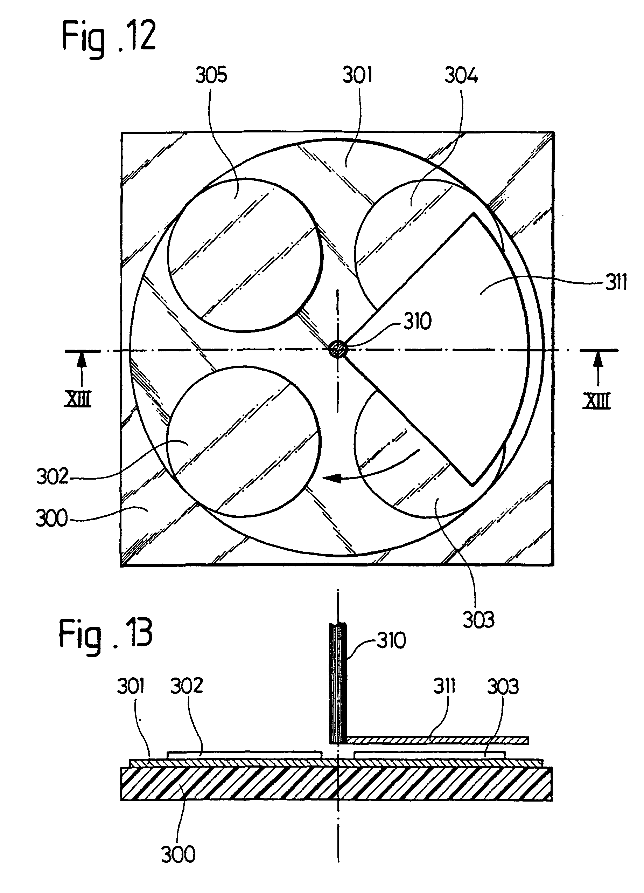

Les figures 12 à 26 présentent diverses variantes de réalisation intégrées de dispositifs selon l'invention.

Les figures 12 et 13 présentent une réalisation sur un seul substrat en un matériau semi-conducteur, dans lequel est réalisé un circuit intégré 300 et, en surface, un enroulement primaire circulaire 301, par exemple en cuivre ou en or, surmonté par quatre enroulements 302, 303, 304, 305 secondaires, par exemple en aluminium.

A titre d'exemple non limitatif, l'enroulement primaire sera réalisé par déposition galvanique, tandis que les enroulements secondaires seront réalisés à l'aide de techniques photolithographiques et de gravure, telles qu'utilisées dans la fabrication des circuits intégrés.

L'objet de la détection est ici la position et la vitesse de rotation d'un axe 310. On a muni cet axe d'un secteur 311 métallique qui tourne au-dessus des enroulements 301 à 305, afin de servir de cible pour détecter la position angulaire de l'axe 310. Le secteur 311 peut être en métal ferromagnétique, ou non ferromagnétique, selon le type de fonctionnement envisagé.

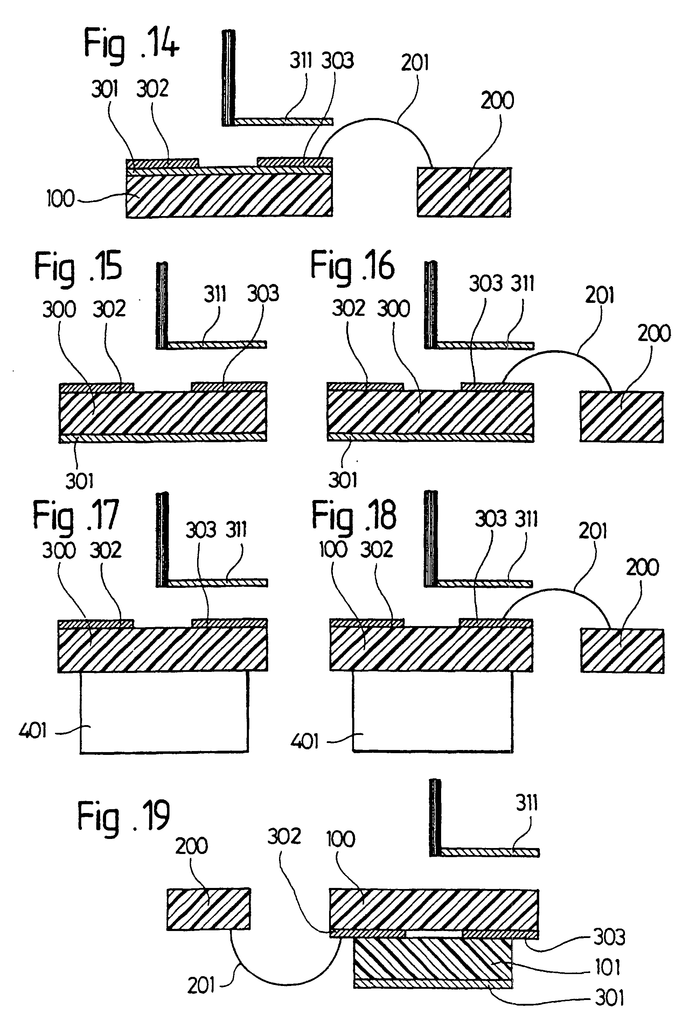

Les figures 14 à 26 illustrent des variantes de réalisation intégrées obtenues en considérant :
- que les enroulements peuvent être disposés sur des puces séparées d'un circuit intégré de détection, lequel est relié aux enroulements par des fils;
- ou que chaque face du circuit intégré (ou d'une puce) comporte un type d'enroulement, la face du circuit intégré (respectivement de la puce) orienté vers la pièce mobile comportant les enroulements secondaires, la face opposée comportant l'enroulement primaire;
- ou que l'enroulement primaire est une bobine excitatrice non intégrée;
- ou que le dispositif est formé de deux puces, une puce sur laquelle est ménagé l'enroulement primaire et une autre puce sur laquelle sont ménagés les enroulements secondaires; les deux puces étant accolées;
- ou que les enroulements primaire et secondaires, au lieu d'être superposés, sont réalisés sur une seule face. Cette face unique de circuit intégré est alors divisée en trois zones dans chacune desquelles est ménagé un enroulement;
- ou que des couches déposées ferromagnétiques, par exemple en FeNi, ou métallique peuvent être disposées au centre et/ou à la surface d'un enroulement afin de canaliser les lignes de champ vers la pièce détecter;
- ou qu'un cadre ferromagnétique ou un blindage métallique peuvent entourer le dispositif de détection, toujours afin de canaliser les lignes de champ.

La figure 14 montre ainsi une variante du dispositif selon l'invention de la figure 12, dans laquelle le circuit de détection est séparé du capteur proprement dit. On voit ainsi que les enroulements secondaires 302, 303 ménagés au-dessus d'un enroulement primaire 301, lui même ménagé à la surface d'un substrat de silicium 100, sont connectés au circuit intégré de détection 200, qui peut être disposé à distance du capteur 100 proprement dit par des fils 201.

A la figure 15 est représentée une variante de la réalisation de la figure 12, dans laquelle l'enroulement primaire 301 est ménagé à la base du circuit intégré 300, les enroulements secondaires 302, 303 étant ménagés sur la face supérieure du circuit intégré, face dirigée vers la pièce mobile 311 à détecter.

La figure 16 présente une variante de la figure 15 dans laquelle l'enroulement primaire est réalisé sur la face inférieure d'un substrat en silicium 300, les enroulements secondaires 302, 303 étant ménagés sur la face supérieure de ce substrat de silicium 300 et les enroulements étant reliés à un circuit intégré de détection 200, séparé de la puce de silicium 300.

La figure 17 montre encore qu'on peut réaliser l'enroulement primaire sous forme d'une bobine excitatrice externe (non intégrée et non planaire), cette bobine excitatrice externe 401 pouvant être disposée sous le circuit intégré de détection 300, les enroulements secondaires étant de préférence réalisés sous forme d'enroulements planaires 302 et 303 ménagés à la surface du circuit intégré de détection 300.

A la figure 18 est représentée la variante de la figure 17 dans laquelle la bobine excitatrice externe est disposée sous le substrat en silicium 100 sur lequel sont ménagés les enroulements planaires secondaires 302 et 303. Les enroulements sont connectés à un circuit intégré 200, séparé du capteur proprement dit, constitué par la puce de silicium 100.

La figure 19 rappelle une variante dans laquelle les enroulements secondaires 302, 303 sont ménagés sur une puce de silicium 100, l'enroulement primaire 301 étant ménagé sur une autre puce de silicium 101. Les deux puces 100 et 101 sont accolées, les enroulements étant reliés à un circuit intégré de détection 200 séparé. La puce 100 comportant les enroulements secondaires 302, 303 est orientée vers la pièce à détecter 311, de sorte que les enroulements secondaires 302, 303 sont intercalés entre l'enroulement primaire 301 et la pièce mobile 311. Ce mode de réalisation sur deux puces est intéressant dans le cas d'enroulements primaire 301, et secondaires 302, 303 réalisés dans des métaux différents et ayant des dimensions relativement importantes.

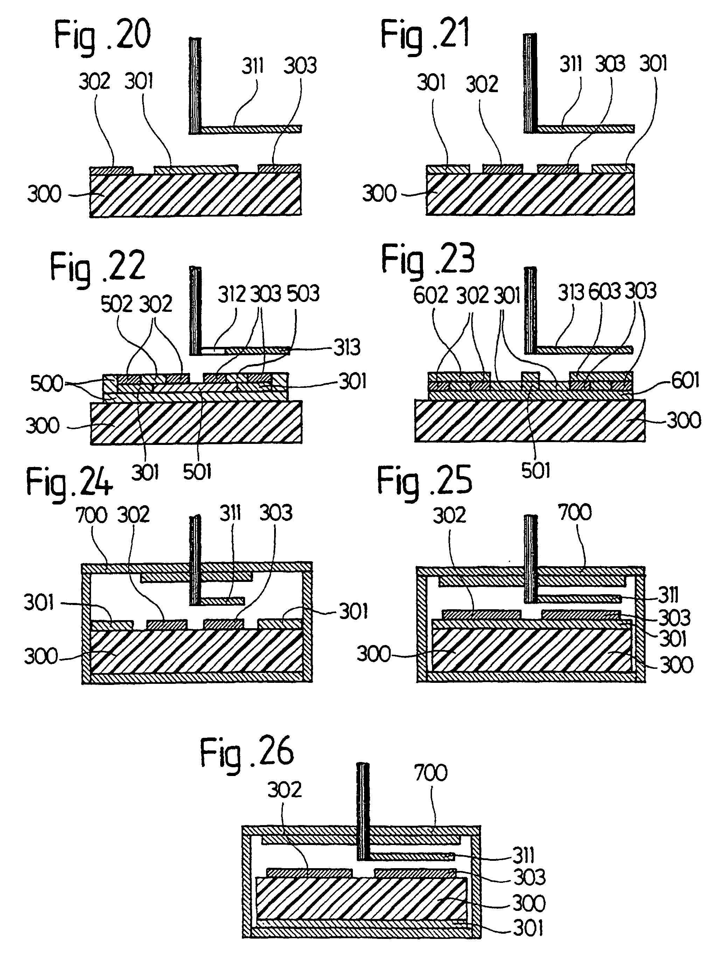

A la figure 20, on voit que tous les enroulements ont été réalisés sur la même face d'un circuit intégré 300. L'enroulement primaire 301 est ménagé au centre de cette surface du circuit intégré 300, dans l'axe 310 de la pièce rotative à détecter 311. L'enroulement secondaire 302 est ménagé sur une zone voisine de l'enroulement primaire 301, à la surface du circuit intégré 300. L'autre enroulement secondaire 303 est ménagé de l'autre côté de l'enroulement primaire 301. Ainsi les enroulements secondaires 302,303 reçoivent les lignes de champ partant d'un pôle de l'enroulement primaire 301 et retournant vers l'autre pôle de cet enroulement. Ces lignes de champ sont bien sûr modifiées par le passage de la pièce métallique 311.

A la figure 21 est représentée une variante de la figure 20 dans laquelle les enroulements secondaires sont ménagés au centre du circuit intégré de détection 300, l'enroulement primaire 301 étant formé de spires suivant le pourtour du circuit intégré 300. Les deux enroulements secondaires 302, 303 sont donc disposés chacun dans une moitié du disque central formé au milieu de l'enroulement primaire 301.

A la figure 22, on voit que des films structurés (signifiant qu'ils ont été mis dans une forme voulue) en fer doux, ou en cuivre, ont été insérés au centre et à la surface des enroulements. Un circuit intégré 300 est ainsi surmonté d'un film de fer doux 500 sur lequel est déposé l'enroulement primaire 301. Le centre de cet enroulement 301 a été évidé pour laisser place à une autre couche structurée de fer doux 501. Enfin, chaque demi-plan de l'enroulement primaire 301 et de sa couche centrale 501 est surmonté d'un enroulement secondaire respectif 302, 303, au centre desquels une couche de fer doux 502, 503 est insérée. Les lignes de champ sont ainsi canalisées vers le centre des enroulements, ce qui augmente considérablement le champ magnétique reçu et le signal détecté.

A la figure 23 est représentée une variante de la figure 12 dans laquelle un circuit intégré 300 est toujours surmonté d'une couche structurée de fer doux 601 qui est surmontée, dans sa partie centrale, par un enroulement primaire 301 et, dans ses parties latérales, par deux enroulements secondaires 302 et 303. Le centre de l'enroulement primaire 101 a été évidé pour laisser place à une autre couche en fer doux 501 de même que les centres des enroulements secondaires 302 et 303 comportent, respectivement, un noyau de fer doux. Les enroulements secondaires 302 et 303 peuvent encore être couverts d'une couche en fer doux respective 602 et 603, couches qui les séparent de l'espace où se déplace la pièce à détecter 31.

A la figure 24, on a représenté une variante du mode de réalisation de la figure 21 dans laquelle le dispositif constitué par le circuit intégré de détection 300, comportant les enroulements 301, 302 et 303, et la pièce mobile à détecter 311 sont enfermés dans un coffret en fer doux ou un blindage métallique 700 afin de canaliser les lignes du champ magnétique.

La figure 25 est une variante de la figure 13 dans laquelle le dispositif implanté sur le circuit intégré 300, est également enfermé dans un cadre en fer doux ou un blindage métallique afin de canaliser les lignes du champ magnétique.

Enfin, à la figure 26 est représentée une variante de la figure 15 dans laquelle le dispositif ménagé sur le circuit intégré 300 (avec un enroulement primaire 301 à sa face inférieure et des enroulements secondaires 302, 303 à sa face supérieure) est également enfermé dans un cadre en fer doux ou blindage métallique 700.

De tels circuits magnétiques servent à renforcer le signal reçu avec le dispositif selon l'invention. Le cadre sert aussi de protection du capteur contre les perturbations mécaniques et les bruits électromagnétiques.

Dans la série de caractéristiques de ce dispositif de détection, on notera cependant qu'il ne comporte pas de partie mobile. Il présente donc une forte résistance aux chocs et vibrations mécaniques. De plus, les variantes totalement intégrées ne nécessitent aucun fil d'interconnexion, ce qui réduit les capacités parasites et améliorent la résistance au bruit électromagnétique ambiant.

Un autre avantage est que la partie capteur résiste à de fortes contraintes thermiques. De plus les caractéristiques du dispositif selon l'invention sont indépendantes de la température.

La mesure fournie par le dispositif présente, en outre, une caractéristique linéaire. Le signal démodulé fournit, en effet, une sortie analogique dont le niveau varie proportionnellement à la position relative entre une dent et un créneau.

Un autre avantage important est la grande immunité du dispositif aux bruits électriques. La taille miniature du dispositif limite en effet la réception de ces bruits et l'intégration poussée empêche l'insertion de parasites avant le traitement du signal. La connexion des enroulements en opposition (figure 10) est particulièrement intéressante car le bruit apparaissant sur un enroulement se soustrait au bruit apparaissant sur l'autre.

Enfin comme le montre la figure 2, le niveau de modulation du signal est peu influencé par une modification de la distance capteur-pièce mobile.

## Revendications

1. Dispositif de détection de position et/ou de mouvement d'une pièce (0) apte à se déplacer relativement audit dispositif et comportant des zones (2) de faible perméabilité magnétique et des zones (3) de forte perméabilité magnétique influençant un champ magnétique, le dispositif comprenant, au moins, un enroulement (10) primaire induisant un champ magnétique (B1) et, au moins, une paire d'enroulements (20, 30) secondaires pour recevoir le champ magnétique, les enroulements secondaires étant planaires (P2),
**caractérisé en ce que** les enroulements sont disposés sensiblement parallèlement au plan de la pièce et en regard desdites zones, lesdits enroulements secondaires (20, 30) étant distincts et disposés selon une structure différentielle par rapport à l'enroulement primaire, de telle sorte que chaque enroulement (20, 30) secondaire reçoit une partie (B2, B3) du champ magnétique (B1) modifiée par la présence d'une zone de faible (2) ou de forte (3) perméabilité,
et **en ce que** le dispositif de détection comprend en outre un circuit de détection pour mesurer la différence entre les parties (B2, B3) du champ magnétique reçues par lesdits enroulements secondaires (20, 30) et pour détecter la position, la vitesse de mouvement et/ou la direction de mouvement de la pièce (0) indépendamment des variations de la valeur du champ magnétique et des variations de distance entre ladite paire d'enroulements secondaires (20, 30) et ladite pièce (0).

2. Dispositif de détection selon la revendication 1, **caractérisé en ce que** l'enroulement primaire est alimenté par un signal alternatif et **en ce que** ledit circuit de détection mesure la modulation d'amplitude d'un signal (F20, F30) reçu sur un enroulement (20, 30) secondaire, le mouvement de la pièce modulant la réception du signal.

3. Dispositif de détection selon la revendication 1, **caractérisé en ce que** l'enroulement primaire est alimenté par un signal alternatif et **en ce que** ledit circuit de détection mesure la modulation de phase d'un signal (F20, F30) reçu sur un enroulement (20, 30) secondaire, le mouvement de la pièce modulant la réception du signal.

4. Dispositif de détection selon la revendication 2 ou la revendication 3, **caractérisé en ce que** le circuit de détection compare les modulations (A, B) des signaux reçus sur les enroulements secondaires et détermine la direction de mouvement de la pièce.

5. Dispositif de détection selon l'une des revendications 1 à 4, **caractérisé en ce que** les enroulements (20, 30) secondaires sont décalés l'un par rapport à l'autre parallèlement (P2) au plan de la pièce.

6. Dispositif de détection selon l'une des revendications 1 à 5, **caractérisé en ce que** les enroulements (20, 30) secondaires sont de dimensions sensiblement égales aux dimensions des zones de faible (2) et de forte (3) perméabilité magnétique de la pièce.

7. Dispositif de détection selon l'une des revendications 1 à 6, **caractérisé en ce que** des enroulements (10, 20, 30) sont déposés et gravés sur au moins une plaquette (50).

8. Dispositif de détection selon la revendication 7, **caractérisé en ce que** des enroulements primaires et secondaires (301, 302, 303, 304, 305) sont réalisés à la surface d'un circuit intégré (300).

9. Dispositif de détection selon la revendication 1, 2, 3 ou 4, **caractérisé en ce que** le circuit de détection est réalisé sous forme de circuit intégré.

## Patentansprüche

1. Vorrichtung für die Erfassung der Position und/oder der Bewegung eines Teils (0), das sich relativ zu der Vorrichtung verlagern kann und Zonen (2) mit geringer magnetischer Permeabilität sowie Zonen (3) mit hoher magnetischer Permeabilität, die ein Magnetfeld beeinflussen, besitzt, wobei die Vorrichtung wenigstens eine Primärwicklung (10), die ein Magnetfeld (B1) induziert, und wenigstens ein Paar Sekundärwicklungen (20, 30), die das Magnetfeld empfangen, umfaßt, wobei die Sekundärwicklungen eben (P2) sind,
**dadurch gekennzeichnet, daß** die Wicklungen im wesentlichen parallel zu der Ebene des Teils und gegenüber den Zonen angeordnet sind, wobei die Sekundärwicklungen (20,30) voneinander verschieden und in einer differentiellen Struktur in bezug auf die Primärwicklung angeordnet sind, derart, daß jede Sekundärwicklung (20, 30) eine Komponente (B2, B3) des Magnetfeldes (B1) empfängt, die durch das Vorhandensein einer Zone mit geringer (2) oder hoher (3) Permeabilität modifiziert ist,
und daß die Erfassungsvorrichtung außerdem eine Erfassungsschaltung umfaßt, um die Differenz zwischen den von den Sekundärwicklungen (20, 30) empfangenen Magnetfeldkomponenten (B2, B3) zu messen und um die Position, die Bewegungsgeschwindigkeit und/oder die Bewegungsrichtung des Teils (0) unabhängig von Änderungen des Wertes des Magnetfeldes und von Änderungen des Abstandes zwischen dem Paar Sekundärwicklungen (20, 30) und dem Teil (0) zu erfassen.

2. Erfassungsvorrichtung nach Anspruch 1, **dadurch gekennzeichnet, daß** die Primärwicklung durch ein Wechselspannungssignal gespeist wird und daß die Erfassungsschaltung die Amplitudenmodulation eines Signals (F20, F30), das bei einer Sekundärwicklung (20, 30) empfangen wird, mißt, wobei die Bewegung des Teils den Empfang des Signals moduliert.

3. Erfassungsvorrichtung nach Anspruch 1, **dadurch gekennzeichnet, daß** die Primärwicklung durch ein Wechselspannungssignal gespeist wird und daß die Erfassungsschaltung die Phasenmodulation eines Signals (F20, F30), das bei einer Sekundärwicklung (20, 30) empfangen wird, mißt, wobei die Bewegung des Teils den Empfang des Signals moduliert.

4. Erfassungsvorrichtung nach Anspruch 2 oder Anspruch 3, **dadurch gekennzeichnet, daß** die Erfassungsschaltung die Modulationen (A, B) der bei den Sekundärwicklungen empfangenen Signale vergleicht und die Bewegungsrichtung des Teils bestimmt.

5. Erfassungsvorrichtung nach einem der Ansprüche 1 bis 4, **dadurch gekennzeichnet, daß** die Sekundärwicklungen (20, 30) relativ zueinander und parallel (P2) zu der Ebene des Teils versetzt sind.

6. Erfassungsvorrichtung nach einem der Ansprüche 1 bis 5, **dadurch gekennzeichnet, daß** die Sekundärwicklungen (20, 30) Abmessungen besitzen, die im wesentlichen gleich den Abmessungen der Zonen mit geringer (2) bzw. mit hoher (3) magnetischer Permeabilität des Teils sind.

7. Erfassungsvorrichtung nach einem der Ansprüche 1 bis 6, **dadurch gekennzeichnet, daß** die Wicklungen (10, 20, 30) auf wenigstens einem Plättchen (50) abgeschieden und geätzt sind.

8. Erfassungsvorrichtung nach Anspruch 7, **dadurch gekennzeichnet, daß** die Primär- und Sekundärwicklungen (301, 302, 303, 304, 305) auf der Oberfläche einer integrierten Schaltung (300) verwirklicht sind.

9. Erfassungsvorrichtung nach Anspruch 1, 2, 3 oder 4, **dadurch gekennzeichnet, daß** die Erfassungsschaltung in Form einer integrierten Schaltung verwirklicht ist.

## Claims

1. Device for detecting the position and/or movement of a part (0) able to move with respect to said device and including zones (2) of low magnetic permeability and zones (3) of high magnetic permeability influencing a magnetic field, said device comprising, at least, a primary coil (10) inducing a magnetic field (B1) and, at least, a pair of secondary coils (20, 30) for receiving the magnetic field, the secondary coils being planar (P2),
**characterised in that** the coils are disposed substantially parallel to the plane of the part and facing said zones, the secondary coils (20, 30) being distinct and disposed according to a differential structure with respect to the primary coil, so that each secondary coil (20, 30) receives a part (B2, B3) of the magnetic field (B1) modified par presence of a zone of low (2) or high (3) permeability,
and **in that** the detection device further comprises a detection circuit for measuring the difference between the parts (B2, B3) of the magnetic field received by said secondary coils (20, 30) and for detecting the position, the speed of the movement and/or the direction of the movement of the part (0) independently of the variations of the magnetic field and the variations of the distance between said pair of secondary coils (20, 30) and said part (0).

2. Detection device according to claim 1, **characterised in that** the primary coil is supplied with an alternating signal and **in that** said detection circuit measures the amplitude modulation of a signal (F20, F30) picked up by a secondary coil (20, 30), the movement of the part modulating the signal reception.

3. Detection device according to claim 1, **characterised in that** the primary coil is supplied with an alternating signal and **in that** a detection circuit measures the phase modulation of a signal (F20, F30) picked up by a secondary coil (20, 30), the movement of the part modulating the signal reception.

4. Detection device according to claim 2 or claim 3, **characterised in that** the detection circuit compares the modulations (A, B) of the signals picked up by the secondary coils and determines the direction of movement of the part.

5. Detection device according to one of claims 1 to 4, **characterised in that** the secondary coils (20, 30) are staggered with respect to each other, parallel (P2) to the plane of the part.

6. Detection device according to one of claims 1 to 5, **characterised in that** the secondary coils (20, 30) are of substantially equal dimensions to the dimensions of the zones of low (2) and high (3) magnetic permeability.

7. Detection device according to one of claims 1 to 6, **characterised in that** the coils (10, 20, 30) are deposited and etched on at least one plate (50).

8. Detection device according to claim 7, **characterised in that** the primary and secondary coils (301, 302, 303, 304, 305) are realised on the surface of an integrated circuit (300).

9. Detection device according to claim 2, 3 or 4, **characterised in that** the detected circuit is realised in the form of an integrated circuit.
